Europäisches Patentamt

European Patent Office

Office européen des brevets

(11) Publication number: **0 247 677**
**A2**

## (12) EUROPEAN PATENT APPLICATION

(21) Application number: **87200914.7**

(22) Date of filing: **18.05.87**

(51) Int. Cl.⁴: **B60N 3/04**

(30) Priority: **22.05.86 IT 2195586 U**

(43) Date of publication of application:
**02.12.87 Bulletin 87/49**

(84) Designated Contracting States:
**AT BE CH DE ES FR GB GR IT LI LU NL SE**

(71) Applicant: **Capaccioni, Livio**
**Località San Giuseppe**
**I-20080 Vernate Milano(IT)**

(72) Inventor: **Capaccioni, Livio**
**Località San Giuseppe**
**I-20080 Vernate Milano(IT)**

(74) Representative: **Riccardi, Sergio**
**Riccardi & Co. Via Macedonio Melloni, 32**
**I-20129 Milano(IT)**

(54) **Mat with moulded protective border.**

(57) A mat (1) with moulded protective border for motor vehicles is disclosed, wherein a perimetral profile border (4) is applied by injection moulding, said border (4) being adapted to hold on the mat (1) dirt taken inside a motor vehicle by passenger's footwear.

Fig. 1

EP 0 247 677 A2

## "MAT WITH MOULDED PROTECTIVE BORDER"

The present invention relates to a mat for motor vehicles, provided with a moulded protective border of various shapes, applied along the mat perimeter by means of moulds and corresponding material injection.

It is known that the mats for motor vehicle comprise a support made of nonslip plastic material, on which a carpet-like covering is glued or molten, having any desired decoration and/or shape.

Said mats are generally laid on the vehicle floor inner upholstery installed by the manufacturers during assembly, in order to prevent soiling due to dirty footwear and other reasons.

However, dirt is not toally held because there are no particular borders along the mat perimeter, excepting a simple seam with a ribbon, more particularly applied in order that the carpet covering weft is not frayed.

The present invention solves this problem by providing a holding border, giving to the mat a cleaner and nicer appearance, a greater rigidity so as to avoid the unpleasant curling or rolling with possible negative consequences on driving and with guaranteed holding of soil, water, snow and the like inevitably brought inside the vehicle by footwear, holding this dirt on the mat, where it is easy to be removed, and avoiding humidity spreading around vehicle's inside.

Said border gives also a higher guarantee of intactness and durability, since it is made by injection moulding of the plastic material directly on the carpet covering and forms a single base of considerable thickness supporting the overlying carpet.

In practice, said mat with moulded protective border may even take different forms all falling within the scope of the invention, which will be hereinafter described in detail as a non limiting example only, in a practical embodiment shown in the figures of the accompanying sheet of illustrative dravings, in which:

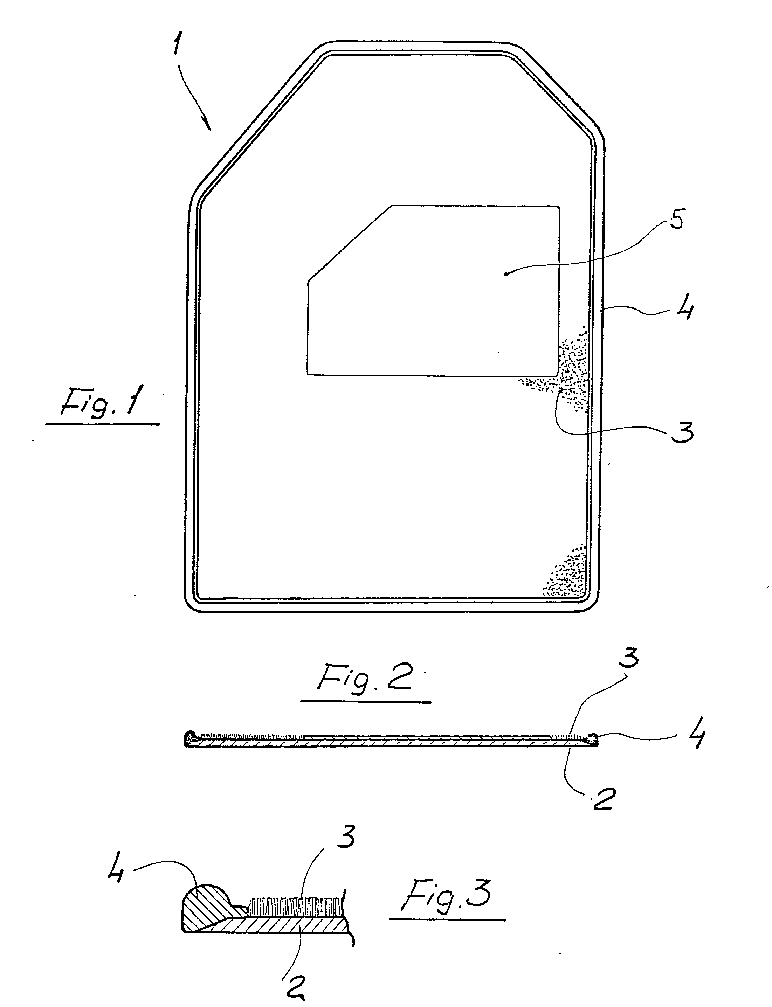

Fig. 1 is a general view of a generic mat for motor vehicles, to which a holding perimetral border was applied according to the present invention;

Fig. 2 is a cross-sectional view of said mat; and

Fig. 3 is a detail on an enlarged scale, of the border of said mat, having an illustrative but non limiting section and showing the injection moulding on the supporting base.

With reference now to the figures of the drawing, the mat 1 has a base support 2 of known type, generally made of nonslip rubber or plastic material, on which a carpet covering 3 is applied. Subsequently, through an injection process, embedding also the edge weft of the carpet covering 3, along the perimeter a holding border 4 is applied, having such a shape as to prevent discharge of soil, water, snow and the like.

It is to be pointed out that said border 4 may have any form, section and/or colour, provided that it achieves the above mentioned function. The mat 1 may preferably but not necessarily be provided with a heel bearing portion 5, preferably applied to the mat with the same process used for the holding border 4, and made of the same type of material of said border.

It is also to be pointed out that the foregoing detailed description of the preferred embodiment does not limit to it the invention, but on the contrary it is to be understood that many modifications, variations, additions and/or substitutions may be resorted to the invention, without altering however its spirit and objects nor departing from its scope of protection, as it is also defined in the appended claims.

## Claims

1. Mat with moulded protective border, characterized by the fact of having a perimentral profile border (4) adapted to hold on the mat (1) water, snow, soil and the like taken inside a motor vehicle by passenger's footwear.

2. Mat according to Claim 1, characterized in that said perimentral profile border (4) is applied by injection moulding so as to be applied directly on the base support (2) provided with a carpet covering (3).

3. Mat according to Claim 1, characterized in that said profile border (4) is also adapted to prevent that the carpet (3) becomes frayed on the edges, as the perimetral weft is embedded by the injection moulding process.

4. Mat according to one or more of the preceding claims, characterized in that it is also provided with a heel bearing portion (5), preferably applied on the mat by the same moulding process used for the holding border (4) and made of the same material.

5. Mat with moulded protective border for motor vehicles, as hereinbefore described and as illustrated in the figures of the accompanying sheet of drawings, for the above mentioned objects.

0 247 677

Fig.1

Fig.2

Fig.3